# EUROPÄISCHE PATENTSCHRIFT

(11) **EP 1 297 054 B1**
(45) Veröffentlichungstag und Bekanntmachung des Hinweises auf die Patenterteilung: **01.08.2007**
(21) Anmeldenummer: 01967089.2
(22) Anmeldetag: 21.06.2001
(51) Int. Cl.: C08G 69/34, C09J 177/08

(54) **VERWENDUNG VON SCHMELZKLEBSTOFFEN ZUR ABDICHTUNG VON GESTEIN ODER BAUMATERIAL**
USE OF MELT-ADHESIVES FOR SEALING OFF ROCKS OR BUILDING MATERIALS
UTILISATION DES COLLES FUSIBLES POUR RENDRE ETANCHES DE LA ROCHE OU UN MATERIAU DE CONSTRUCTION

(30) Priorität: 30.06.2000 DE 10031992
(43) Veröffentlichungstag der Anmeldung: 02.04.2003
(73) Patentinhaber: Henkel Kommanditgesellschaft auf Aktien, 40589 Düsseldorf (DE)
(72) Erfinder: BECKER, Bettina, 40789 Monheim (DE); SCHEFFLER, Ingolf, 41470 Neuss (DE); WICHELHAUS, Jürgen, 42113 Wuppertal (DE); MEUTEN, Liane, 40789 Monheim (DE)
(86) Internationale Anmeldenummer: PCT/EP2001/007206
(87) Internationale Veröffentlichungsnummer: WO 2002/000764

(56) Entgegenhaltungen:
- EP-A- 1 013 694
- WO-A-00/12863

## Beschreibung

Die Erfindung betrifft die Verwendüng von Schmelzklebstoffen auf der Basis von Polyaminoamiden zum Abdichten von Hohlräumen und Rissen im Boden, in Gesteinsformationen, Bauwerkskonstruktionen und / oder Mauern.

Mauern und Hohlräume im Boden, Gestein oder im Gebirge, insbesondere Bauwerkskonstruktionen wie Tunnel, Stollen, Schächte, Kanäle und Kavernen müssen zum Schutz gegen eindringendes Wasser bzw. eindringende schadstoffhaltige Flüssigkeiten oder Gase abgedichtet werden. Dazu wird über ein abgedichtetes Bohrloch flüssiges Dichtungsmaterial unter Druck in das angrenzende Gestein oder in den angrenzenden Boden eingebracht (injiziert).

Als Injektionsflüssigkeiten sind Zementsuspensionen, Lösungen oder Dispersionen von Polyurethanharzen oder Epoxidharzen sowie flüssige mehrkomponentige Polyurethanharze oder Epoxidharze bekannt. Diese Injektionsflüssigkeiten haben den Nachteil sehr langer, nicht exakt einstellbarer Aushärtezeiten. In großen Bauwerken, wie z.B. Tunnels, stößt dies auf große technische Schwierigkeiten insbesondere wenn es zu so genannten "Rückläufen" kommt, d.h. wenn Risse, Ritzen, Poren oder Klüfte an die Oberfläche des Gesteins, bzw. Mauerwerks führen, durch die die Injektionsflüssigkeiten austreten können, bevor sie ausgehärtet sind. Dadurch kann kein ausreichender lnjektionsdruck aufgebaut werden, so daß die Risse, Klüfte oder Hohlräume nicht ausreichend ausgefüllt werden und es zu mangelhafter Abdichtung kommt. Bisher hilft wenn man sich in diesen Fällen damit, daß die an der Oberfläche befindlichen Klüfte mit Schnellmörtel abgedichtet werden oder an den Austrittsstellen besonderes schnell aushärtende Injektionsharze eingesetzt werden. Weiterhin ist es schwierig diese Injektionsharze so einzubringen, daß der Schrumpf während der Aushärtung die Abdichtfunktion nicht gefährdet. Die DE -A- 19728088 schlägt ein Verfahren zur Abdichtung von Bauteilen durch Injektion von gelbildenden Wasserglaslösungen vor, bei dem die Wasserglaslösung vor dem Einspeisen in die Injektionsstelle oder beim Austreten aus der Injektionsstelle mit Estern oder einer wässrigen Härterlösung gemischt wird, die Alkalimetal-aluminate, Salze von Erdalkalimetall-Kationen, saure wasserlösliche Salze, Glyoxal, organische Säuren oder deren Verbindungen enthält. Hierdurch wird die Wasserglaslösung in ein Gel umgewandelt. Obwoh derartige gelbildende Systeme so formuliert werden können, das sie eine sehr schnelle Gelbildung bewirken haben sie den entscheidenden Nachteil, daß sie keine große spaltüberbrückende Wirkung haben, insbesondere wenn diese Spalte auch gegen drückendes Wasser abgedichtet werden so:len.

Zur Überwindung dieser technischen Schwierigkeiten, bei den bisher bekannten verfahren schlägt die WO 00/12863 ein Verfahren zur Abdichtung von Gestein bzw, Baumaterial und eine Vorrichtung hierzu vor, bei der heiße Schmelzklebstoffe mit geringer Viskosität und schneller Anfangsfestigkeit unter hohem Druck über das Bohrloch in das Gestein bzw. Baumaterial eingepresst werden, wo nach sie in die Klüfte und Poren des abzudichtenden Gesteins bzw. Baumaterials eindringen. Nach dem Abkühlen und Erstarren des Schmelzklebstoffes sind die Poren und Klüfte abgedichtet und dauerhaft verschlossen. Es wird vorgeschlagen, Polyamide oder Gele mit Polyamidähnlichen Eigenschaften hierfür zu verwenden. Angaben über die Zusammensetzung der hierfür geeigneten Schmelzklebstoffe werden in dieser Schrift nicht gemacht. Insbesondere werden keinerlei Angaben zur ökologischen Verträglichkeit gemacht.

EP-A-1013694 beschreibt Schmelzklebstoffe auf der Basis von Polyamiden. Die offenbarten Polyamide sollen aus rohen polymeren Fettsäuren, gegebenenfalls aliphatischen und/oder aromatischen Dicarbonsäuren, und einer Aminkomponente he-gestellt werden. Die Aminkomponente besteht aus einem oder mehreren aliphatischen Diaminen mit einer Anzahl von Kohlenstoffatomen, die gräßer als 4 ist sowie mindestens einem oder mehreren cycloaliphatischen oder heterocyclischen Diamin und gegebenenfalls einem oder mehreren Polyoxyalkylendiaminen. Gemäß der Lehre dieser Schrift zeigen derartige Schmelzklebstoffe ausgezeichnete Haftung auf unbehandelten Poly-α-Olefin-Substraten. Eine aufwendige Reinigung der polymeren Fettsäure durch Destillaton wird bei der Vorgehensweise gemäß dieser Schrift vermieden, ebenso wie der Zusatz von weiteren Polymeren bei der Formulierung von Schmelzklebstoffen, die für das Kleben von Poly-α-Olefinen geeignet sind. Diese Schrift offenbart keine Polyamide, deren wasserlösliche oder wasserextrahierbaren Bestandteile keine toxischen Wirkungen auf Daphnien haben.

Ausgehend von dem Stand der Technik haben sich die Erfinder die Aufgabe gestellt, Polyaminoamid-Schmelzklebstoffe bereitzustellen, die für die vorgenannten Verwendungszwecke zum Abdichten von Hohlräumen im Boden in Gesteinsformationen, Bauwerkskonstruktion und/oder Mauern geeignet sind.

Gegenstand der vorliegenden Erfindung ist die Verwendung von Polyamiden auf der Basis von Reaktionsprodukten aus Polymerfettsäuren, ggf. C₁₄-C₁₈-Monocarbonsäuren, C₄-C₁₄-Dicarborlsäuren und Diaminen, dadurch gekennzeichnet, dass die wasserlöslichen oder wasserextrahierbaren Bestandteile eine Daphnientoxizität EC50 von > 300 g Eluat/l haben oder dass bei einer Verdünnung der Prüfwässer auf bis zu 1:10 diese keine toxischen Wirkungen nach DIN 38412 Teil 11 auf Daphnien haben, zum Abdichten von Hohlräumen im Boden, in Gesteinsformationen, Bauwerkskonstruktionen und/oder Mauern,

Derartige Polyamide sind insbesondere zum Abdichten von Tunneln, Stollen, Schächten, Kanälen oder Kavernen geeignet.

Ein weiterer wesentlicher Aspekt der erfindungsgemäß zu verwendenden Polyaminoamid-Schmelzklebstoffe ist ein geeignetes Viskositäts-Temperaturprof dergestalt, dass sie bei Temperaturen von etwa 190 bis 200°C eine ausreichend niedrige Viskosität. haben, um mit verfügbaren Pumpen in Mauerwerke bzw. Gesteinsformationen in ausreichendem Volumen injiziert werden zu können, ohne daß es zu unvertretbar hohem Druckaufbau kommt und ohne daß sich die Schmelzklebstoffe thermisch zersetzen. Weiterhin müssen die Schmelzklebstoffe ein schnelle Anfangsfestigkeit aufweisen.

Durch Erhitzen der Polyamid-Schmelzklebstoffe mit schneller Anfangsfestigkeit werden diese in einen niederviskosen Zustand gebracht, wodurch sie auch in die kleinsten Klüfte, Poren, Ritzen u. ä. des Gesteins bzw. Baumaterials eindringen können. Mit Druck werden die Schmelzklebstoffe in das Bohrloch und von dort aus in die Poren und Klüfte des Gesteins bzw. Baumaterials eingepresst, wobei die Temperatur der Schmelzklebstoffe mit der Tiefe der Poren abnimmt, so daß ab einer bestimmten Eindringtiefe vom Bohrloch aus gesehen, je nach Ausgangstemperatur, die Schmelzklebstoffe immer dickflüssiger werden und schließlich erstarren. Durch den Druck der nachströmenden Schmelzklebstoffe werden die schon etwas dickflüssigeren Schmelzklebstoffe noch tiefer in die Poren oder Klüfte nachgepresst. Wurden die Schmelzklebstoffe hoch genug erhitzt, weisen sie eine ausreichend hohe Temperatur auf, so daß die flüssigen erhitzten Schmelzklebstoffe tief in die Poren des Gesteins bzw. Baumaterials eindringen können, bevor sie abkühlen und erstarren. Zur Unterstützung kann das angrenzende Gestein, Mauerwerk oder der Boden vor der Injektion vorgeheizt werden.

Bei Kontakt mit Wasser haben die Schmelzklebstoffe die Eigenschaft eine begrenzte Wassermenge aufzunehmen, wodurch das Volumen der Schmelzklebstoffe vergrößert wird. Die Schmelzklebstoffe dehnen sich in den Poren und Klüften weiter aus, wodurch das Gestein bzw. Baumaterial noch stärker abgedichtet wird. Wird das abgedichtete Gestein bzw. Baumaterial Wasser bzw. Feuchtigkeit ausgesetzt, so wird durch die Volumensvergrtißerung der Schmelzklebstoffe durch Wasseraufnahme ein Gefüge aufgebaut, das auf Dauer auch einem starken hydrostatischen Druck standhält,

Vorzugsweise wird bei der erfindungsgemäßen Verwendung der Schmelzklebstoffe das Einpressen mehrmals durchgeführt, wobei bereits in Klüften und Poren des abzudichtenden Gesteins bzw. Baumaterials eingedrungene Schmelzklebstoffe zwischen den Einpressvorgängen zumindest teilweise abkühlen können und beim nächsten Einpressvorgang frische, erhitzte Schmelzklebstoffe in andere Klüfte und Poren eindringen können.

Die Vorteile dieses "stop and go"Verfahrens liegen darin, daß auch wenn es zu einem Rücklauf der Schmelzklebstoffe (z.B. durch an die Oberfläche des Gesteins bzw. Mauerwerks führende Klüfte) kommt, trotzdem ein schneller, sicherer Druckaufbau möglich ist. Bei herkömmlichen Verfahren, z.B. unter Verwendung von Epoxidharzen, mußten bei Rücklaufen bisher immer die entsprechenden Klüfte mit "Schnellmörtel" abgedichtet werden oder an den Austrittsstellen mußten sehr schnell härtende Epoxidharze verwendet werden, die unter den Anwendungsbedingungen wegen ihrer kurzen Topfzeit sehr schwer zu handhaben sind. Außerdem wird durch das bei den erfindungsgemäßen Schmelzklebstoffen mögliche "stop and go"Verfahren auch eine Schrumpfung der Schmelzklebstoffe beim Abkühlen durch nachgepresste Schmelzklebstoffe ausgeglichen.

Für ein tiefes Eindringen der erhitzten Schmelzklebstoffe in das Gestein bzw. Baumaterial ist es günstig, wenn vor dem Einpressen der erhitzten Schmelzklebstoffe in das Gestein bzw. Baumaterial durch ein Vorheizen ein Temperaturgradient im Gestein bzw. Baumaterial aufgebaut wird. Um eine frühzeitige Verfestigung durch Abkühlung durch das kalte Gestein bzw. Baumaterial zu verhindern, wird dieses vor Einbringen der Schmelzklebstoffe erhitzt.

Durch das Vorheizen des abzudichtenden Gesteins bzw. Baumaterials wird es möglich, auch weniger hoch erhitzte Schmelzklebstoffe mit schneller Anfangsfestigkeit zur Abdichtung zu verwenden, da sie durch die bereits erhöhte Temperatur des Gesteins bzw. Baumaterials nicht sofort an der Oberfläche des kalten Gesteins bzw. Baumaterials erstarren.

Vorzugsweise werden die erhitzten Schmelzklebstoffe mit einer Temperatur von 50 bis 300°C, besonders bevorzugt zwischen 130° und 250°C und mit einem Druck von 1 bis 500 bar in das Bohrloch eingebracht. Dabei richten sich Druck und Temperatur der Schmelzklebstoffe nach deren Eigenschaften, nach der Dichte, Klüftigkeit bzw. Porosität des Gesteins bzw. Baumaterials, sowie nach der Umgebungstemperatur und der angestrebten Eindringtiefe der Schmelzklebstoffe und deren thermischer Beständigkeit.

Schmelzklebstoffe die unter den vorgenannten Randbedingungen verarbeitbar sind, müssen also vier Grundvoraussetzungen erfüllen:
- sie müssen über längere Zeit thermisch stabil sein um auch wiederholtes Aufheizen auf die Applikationstemperatur ohne Zersetzung zu überstehen.
- sie müssen bei den Applikationstemperaturen zwischen etwa 130 °C und 250 °C eine sehr niedrige Schmelzviskosität haben und gleichzeitig eine hohe Anziehungsfestigkeit beim Erkalten und Erstarren aufweisen.
- sie dürfen keine durch Wasser extrahierbare Bestandteile aufweisen die umwelttoxische Eigenschaften haben.
- sie müssen eine ausreichend lange offene Zeit haben, um in ausreichender Menge pro Zeiteinheit in die Hohlräume injizierbar zu sein.

Erfindungsgemäß lassen sich für einen derartig anspruchsvollen Anwendungszweck Polyaminoamide einsetzen, die aus folgenden Aufbaukomponenten aufgebaut sind:
- 20 - 99 mol%, vorzugsweise 30 - 95 mol%, Dimer- bzw. Polymerfettsäure
- 0 - 50 mol%, vorzugsweise 0 - 30 mol%, C₁₄-C₁₈-Monocarbonsäure
- 0 - 80 mol%, vorzugsweise 5 - 70 mol% C₄-C₁₂-Dicarbonsäuren
- 20 - 85 mol% aliphatische Diamine
- 0 - 70 mol% cycloaliphatische Diamine
- 0 - 60 mol% Polyoxyalkylen - Diamine
- 0 - 50 mol%, vorzugsweise 0 - 30 mol%, monofunktionelle Amine.

Dimer- bzw. Polymerfettsäuren im Sinne dieser Erfindung sind dabei solche Fettsäuren, die in bekannter Weise durch Dimerisierung von aus natürlichen Rohstoffen gewonnen ungesättigten, langkettigen Fettsäuren hergestellt werden und anschließend durch Destillation weitergereinigt werden. Die technischen Dimerfettsäuren enthalten dabei je nach Reinheitsgrad bis zu 5 % monobasische Fettsäuren, im wesentlichen C₁₈-Fettsäuren, 60 - 95 Gew.% manchmal bis zu 98 Gew.% C₃₆-dibasische Fettsäuren (Dimerfettsäuren im engeren Sinne) und 1 - 35 Gew.% C₅₄- und höhere polybasische Fettsäuren ("Trimersäuren"). Die relativen Verhältnisse der Monomer-, Dimer- und Trimerfettsäuren in dem Polymerfettsäuregemisch hängen von der Natur der eingesetzten Ausgangsverbindungen ab, sowie den Polymerisations- Dimerisations- bzw. Oligomerisationsbedingungen und dem Grad der destillativen Trennung. Durch Destillation aufgereinigte Dimerfettsäuren enthalten mindestens 70 Gew.% vorzugsweise 80 Gew.% und häufig 95 - 99 Gew. % an dimerer Fettsäure. In einem weiteren Aufarbeitungsschritt können diese Dimerfettsäuren noch hydriert werden.

Zusätzlich zu den Dimer- bzw. Polymerfettsäuren kann die Säure-Komponente des Polyamids noch C₄-C₁₄-Dicarbonsäuren enthalten, Beispiele derartiger Dicarbonsäuren sind Maleinsäure, Succinsäure, Adipinsäure, Azelainsäure, Sebacinsäure, Dodecandisäure, Glutarsäure, Korksäure, Pimelinsäure oder auch aromatische Dicarbonsäuren wie zum Beispiel Terephthalsäure oder Mischungen der vorgenannten Dicarbonsäuren.

Die Diamin-Komponente besteht im wesentlichen aus einem oder mehreren aliphatischen Diaminen, vorzugsweise mit einer geraden Anzahl an Kohlenstoffatomen, wobei die Aminogruppen an den Enden der Kohlenstoffketten sind. Die aliphatischen Diamine können 2 bis zu 20 Kohlenstoffatome enthalten, wobei die aliphatische Kette linear oder leicht verzweigt sein kann. Die besonders bevorzugten aliphatischen Diamine sind C₄-C₁₂-Diamine mit einer geraden Anzahl an Kohlenstoffatomen.

Die Amino-Komponente kann weiterhin cyclische Diamine oder heterocyclische Diamine enthalten wie zum Beispiel 1,4-Cyclohexandiamin, 4,4'-Diaminodicyclohexylmethan, Piperazin, Cyclohexan-bis-(methylamin), Isophorondiamin, Dimethylpiperazin, Dipiperidylpropan, Dimer-Diamine (Amine hergestellt aus Dimerfettsäuren).

Wenn das Polyaminoamid eine hohe Flexibilität aufweisen soll, können zusätzlich noch Polyoxyalkylendiamine wie zum Beispiel Polyoxyethylendiamine, Polyoxypropylendiamine oder Bis-(di-aminopropyl)-polytetrahydrofuran mit verwendet werden. Dabei sind die Polyoxyalkylendiamine auch als "Jeffamine" (Handelsname der Firma Huntsman) bekannt, besonders bevorzugt. Das Molekulargewicht der eingesetzten Jeffamine liegt zwischen 200 und 4000 vorzugsweise zwischen 400 und 2000.

Die erfindungsgemäß zu verwendenden Schmelzklebstoffe können als zusätzliche Aufbaukomponente noch Bausteine aus Polyepoxiden, Polyolen sowie Polyestern enthalten.

Durch die Auswahl der kurzkettigen Diamine und der kurzkettigen Dicarbonsäuren sowie die Reinheit der Dimerfettsäure lassen sich sowohl die Viskosität und das Viskositäts-Temperatur-Profil sowie der Erweichungspunkt des Schmelzklebstoffes so einstellen, daß der Schmelzklebstoff für die erfindungsgemäße Verwendung geeignet ist. Dabei soll der Schmelzklebstoff bei 190 °C eine Schmelzviskosität von 50 - 10 000 vorzugsweise von 100 - 4000 mPa.s, gemessen nach ASTM D 3236, haben, damit der Schmelzklebstoff im Temperaturbereich zw:schen 180 °C und 250 °C mit herkömmlichen Pumpen gut verpumpbar ist und so ohne Schwierigkeiten in die Applikationsbereiche injiziert werden kann. Ein für die erfindungsgemäße Verwendung sehr gut geeigneter Polyaminoamid - Schmelzklebstoff hat z.B. bei 190 °C eine Viskosität von 450 mPa.s, bei 200 °C nur noch eine Viskosität von 250 mPa.s und bei 230 °C nur noch eine Viskosität von 125 mPa.s. Der Erweichungspunkt eines derartigen Schmelzklebstoffes liegt bei etwa 185 °C, gemessen nach der "Ring and Ball" - Methode ASTM E 28.

Gegen thermischen und oxidativen Abbau müssen Polyaminoamid-Schmelzklebstoffe mit Hilfe von Stabilisatoren geschützt werden, insbesondere wenn sie so hohen thermischen Belastungen ausgesetzt sind, wie für die erfindungsgemäßen Anwendungsfälle. Die hierfür üblicherweise verwendeten Stabilisatoren, z.B. auf Arylphosphatbasis, eigenen sich nicht zur Einbringung in wasserführende Gesteinsschichten oder Bodenbereich. Sie weisen zwar eine hohe Wirksamkeit in Bezug auf ihre stabilisierende Wirkung für den Schmelzklebstoff auf; Tests haben jedoch ergeben, daß diese Stabilisatoren durch Wasser extrahierbar sind und die derartig kontaminierten Wässer eine hohe toxische Wirkung auf Daphnien und Algen haben. Derartig stabilisierte Schmelzklebstoffe würden das angrenzende Grundwasser verunreinigen und sind daher aus ökologischen Gründen nicht für diesen Zweck verwertbar. Erfindungsgemäß werden vorzugsweise solche Stabilisatoren eingesetzt, die bereits während des Polykondensationsprozesses, d.h. des Herstellprozesses des Polyamids fest in das Polyamid-Molekül eingebaut werden. Diese Stabilisatoren sind so fest in das Polymergerüst eingebaut, daß sie nicht durch Wasser extrahierbar sind. Daher führt die Verwendung derartiger Schmelzklebstoffe auch in wasserführenden Gesteins- bzw. Bodenformationen zu keinerlei ökologischen Beeinträchtigungen. Der Toxizitätswert des eingesetzten Stabilisators (bestimmt als EC50-Wert in mg/l) sollte dabei möglichst hoch sein und die Wasserlöslichkeit des Stabilisators (in mg/l) möglichst gering. Vorzugsweise sollte die Wasserlöslichkeit des eingesetzten Stabilisators deutlich kleiner als etwa 0,5 mg/l sein und der EC50-Wert für Dapnia magna oder Algen größer als etwa 50mg/l. Besonderes geeignete Stabilisatoren sind beispielsweise langkettige Arylalkylamine oder Pentaerythrityl-tetrakis(3-(3,5-di-tert.butyl-4-hydroxyphenyl)-propionat (Irganox 1010, Fa. Ciba Specialty Chemicals).

Anhand der nachfolgenden Ausführungsbeispiele soll die Erfindung näher erläutert werden, wobei die Auswahl der Beispiele keine Beschränkung des Umfanges des Erfindungsgegenstandes darstellt.

### Beispiele

Für die nachfolgenden Beispiele wurde der Polyamid Schmelzklebstoff "Macromelt TPX 20-345" (Henkel KGaA) ausgewählt. Dieser Schmelzklebstoff hat bei 190 °C eine Viskosität von 450 mPa.s, bei 200 °C nur noch eine Viskosität von 250 mPa.s und bei 230 °C nur noch eine Viskosität von 125 mPa.s. Sein Erweichungspunkt liegt bei 185 °C, gemessen nach der "Ring and Ball" - Methode ASTM E 28. Als Stabilisator enthielt der Klebstoff ein Dialkyarylamin.

Versuche zur "radialen Abströmung nach Bolesta" zeigten, daß dieser Schmelzklebstoff injelctionsfähig ist. Die Versuchsanordnung erfolgte gemäß Angaben in "Arbeitsgruppe Felsinjektion, Schlußbericht, Mai 1984", S.61-63.

### Beispiel 1:

Versuchsanordnung: Polyamid Schmelzklebstoff "Macromelt TPX 20-345" (Henkel KGaA, Düsseldorf) wurde auf 220°C erhitzt und mit 150 bar (Maschinendruck) in ein 1-Zoll-Wasserleitungsrohr gepresst, das mit Bodenmaterial gefüllt war. Zur Gewährleistung eines Wärmereservoirs wurde ein kleiner Hohlraum an der Einlassstelle freigelassen, Das Übergangsstück wurde mittels eines Meißluftgebläses vorgewärmt. Nach Abschluss des Einpressens des Polyamids wurde eine Druckprüfung mit Pressluft entgegen der Einpressrichtung durchgeführt.

Die Befüllung des Rohres erfolgte mit trockenem Splitt (ca. 3/8 mm, geringer Staubanteil) und die Versuchsanordnung wurde direkt an die Zufuhr der Schmelzstoffe angeschlossen, Nach Abschluss des Einpressens von Polyamid wurde festgestellt, daß der Schmelzstoff die gesamte Länge des Versuchsrohrstückes (2 m) vollständig ausgefüllt hatte, eine Druckprüfung ergab, daß die Ausfüllung bis zum maximal erreichbaren Druck von 10 bar Pressluft druckdicht war. Anschließend wurde noch eine Druckprüfung mittels Öldruck durchgeführt, die Befüllung war bis 10 bar druckdicht.

### Beispiel 2:

Versuchsanordnung wie bei Beispiel 1. Die Befüllung des Rohres erfolgte mit einem Gemisch aus Sand, Kies und Splitt mit hohem Feinkornanteil, wassergesättigt und durch Einschlämmen verdichtet.

Es wurde eine Eindringtiefe des Schmelzstoffes bis ca. 1,2 m festgestellt. Eine Druckprüfung ergab Druckdichte bis zum maximal erreichbaren Druck von 10 bar Pressluft. Anschließend wurde noch eine Druckprüfung mittels Öldruck vorgenommen, wobei eine Druckdichte bis zum maximal erreichbaren Öldruck von 60 bar festgestellt wurde.

Beide Versuche 1 und 2 beweisen eine sehr rasche Abdichtung gegen hohen Wasserdruck (bis zu 60 bar) mit langfristiger Wirksamkeit.

### Beispiel 3 :

Versuchsanordnung (in Anlehnung an die Methode nach "Bolesta"): "Macromelt TPX 20-345" (Henkel KGaA., Düsseldorf) wurde auf 220°C erhitzt und mit 150 bar (Maschinendruck) im geschmolzenen Zustand zwischen zwei Waschbetonplatten gepresst. Der Abstand der Platten betrug ca. 2 mm. Der Hohlraum zwischen den Platten wurde mit einer Gummidichtung derart abgedichtet, daß die darin befindliche Luft verdrängt werden konnte. Die Platten wurden fix verspannt, um ein Abheben zu verhindern.

Innerhalb weniger Sekunden nach Beginn des Einpressens des Polyamids wurde der Spalt zwischen den Platten vollflächig ausgefüllt. Infolge des Drucks entstand in der oberen Platte ein Riss, durch den Polyamid austrat. Nach einigen Minuten Aushärtezeit wurde abermals Polyamid injiziert, welches das bereits vorhandene Polyamid aufschmolz, so daß weiteres Injektionsmaterial aus dem Spalt austrat.

Durch dieses Beispiel wurde bewiesen, daß eine vollflächige Verfüllung von Spalten und Klüften in Gestein bzw. Mauerwerk leicht und einfach durchzuführen ist.

Beispiel 4: Zur Umweltverträglichkeitsprüfung wurden aus dem Polyamidschmelzklebstoff Prüfplatten der Abmessungen 16 cm x 13 cm x 2 cm hergestellt und einer Migrationprüfung nach dem Trogverfahren unterworfen. Dabei wurden jeweils 3 Prüfplatten mit 2,3 I entmineralisiertem Wasser nacheinander 1 Tag , 2 Tage und schließlich 4 Tage bei Raumtemperatur in Kontakt gebracht. Nach jeder Kontaktperiode wurde das Prüfwasser vollständig zur Analyse entnommen und durch frisches entmineralisiertes Wasser ersetzt. Neben der äußeren Beschaffenheit der Prüfwasser wurde die Abgabe organischer Substanzen anhand des organisch gebunden Kohlenstoffs (TOC) und die Abgabe von kupplungsfähigen Substanzen nach DEV H 16 (Phenolindex) bestimmt.

Weiterhin wurden die Prüfwässer der ersten und dritten Migrationsperiode Toxizitätstests nach DIN 38412 Teil 33 (Algenwachstumstest), DIN 38412 Teil 11 (Daphnientest) und dem Leuchtbakterientest (DIN 38412 L 34/341) unterzogen. Dabei waren die Prüfwässer hinsichtlich Färbung, Trübung und Neigung zur Schaumbildung nicht nennenswert beeinflusst. Die Abgabe organischer Verbindungen (TOC) bewegte sich zwischen 1,3 und 2,2 mg/l und ist als sehr gering zu bewerten, sie nahm während der Versuchsdauer wesentlich ab. Die Migration kupplungsfähiger Substanzen (Phenolindex) fiel in Laufe der Untersuchung auf 0,008 mg/l. Dabei ist zu beachten, daß die Nachweisgrenze bei etwa 0,005 mg/l liegt, Wasser mit derartig niedrigem Phenolindex hat Trinkwasserqualität. Die Daphnien - Toxizität nahm von der ersten Versuchsstufe zur dritten Versuchsstufe deutlich ab, der EC 50 Wert bewegte sich von 400 g Eluat/l auf 950 g Eluat/l. Auch die Hemmwirkung der Prüfwässer auf das Algenwachstum zeigte eine sehr geringe Toxizität. Die Daphnien-Toxizität sowie die Hemmwirkung der Prüfwässer auf das Algenwachstum sind bei praxisbezogener Verdünnung als "Null" zu bezeichnen. Diese Bewertung bezieht sich auf einen Vorschlag von Th. Grunder, H.-P. Lühr, W. Rummel und R. Stock ("Entwicklung und Erprobung eines Systems zur Bewertung und Einstufung der ökologischen Verträglichkeit von Produkten hinsichtlich ihrer Grundwasser- und Bodengefährdung", IWS an der TU Berlin, AZ:05624). Die Bestimmung der Leuchtbakterientoxizität ergab für das Prüfwasser der ersten Versuchsstufe einen Wert von GL = 3, dies bedeutet, daß das Eluat nur eine zu vernachlässigende Leuchtbakterientoxizität aufwies.

Diese Toxizitätsdaten beweisen, daß vom erfindungsgemäßen einzusetzenden Schmelzklebstoff keine bedenklich Beeinflussung des Grundwassers ausgeht.

Beispiel 5 (Vergleich): Ein Schmelzklebstoff gleiche Polymerzusammensetzung wie in den vorhergehenden Beispielen, der gemäß Stand der Technik Isodecyldiphenylphosphat als Stabilisator enthielt, wurde den im Beispiel 4 beschriebenen Umweltverträglichkeitsprüfungen unterworfen. Dabei wurden folgende Werte gefunden:
Phenolindex 0,3 mg/l, dieser Wert blieb auch nach langen Eluationszeiten konstant auf dem gleichen hohen Wert
TOC: zwischen 3,3 und 5,6 mg/l
Daphnien-Toxizität, G_{D} = 10, keine abnehmende Tendenz über die Versuchsdauer,
Algen-Toxizität, G_{D} = 50 bis 100, keine abnehmende Tendenz über die Versuchsdauer.

Diese Werte zeigen, daß ein herkömmlich stabilisierter Schmelzklebstoff über einen unvertretbar langen Zeitraum toxische Substanzen in das Eluatwasser abgibt und daher nicht für den Einsatz in Grundwasser-führenden Formationen geeignet ist.

## Patentansprüche

1. Verwendung von Polyamiden auf der Basis von Reaktionsprodukten aus Polymerfettsäuren, ggf. C₁₄-C₁₈-Monocarbonsäuren, C₄-C₁₄-Dicarbonsäuren und Diaminen, **dadurch gekennzeichnet, daß** die wasserlöslichen oder wasserextrahierbaren Bestandteile eine Daphnientoxizität EC50 von > 300 g Eluat/l haben oder daß bei einer Verdünnung der Prufwässer auf bis zu 1:10 diese keine toxischen Wirkungen nach DIN 38412 Teil 11 auf Daphnien haben, zum Abdichten von Hohlräumen im Boden, in Gestelnsformationen, Bauwerkskonstruktionen und/oder Mauern.

2. Verwendung nach Anspruch 1, **dadurch gekennzeichnet, dass** als Aufbaukomponenten
■ 20 bis 99 mol %, vorzugsweise 30 bis 95 mol, % Dimer- bzw. Polymerfettsäure
■ 0 bis 50 mol %, vorzugsweise 0 bis 30 mol %, C₁₄-C₁₈-Monocarbonsäure
■ 0 bis 80 mol %, vozugsweise 5 bis 70 mol %, C₄-C₁₂-Dicarbonsäuren
■ 20 bis 85 mol % aliphatische Diamine
■ 0 bis 70 mol % cyclo-aliphatische Diamine
■ 0 bis 60 mol % Po,yoxyalkylendiamine
■ 0 bis 50 mol %, vorzugsweise 0 bis 30 mol %, monofunktionelle Amine verwendet werden.

3. Verwendung nach Anspruch 1 und 2 **dadurch gekennzeichnet, dass** sie bei 190°C eine Schmelzviskosität von 50 bis 10.000, vorzugsweise 100 bis 4000 mPa.s, gemessen nach ASTM D 3236 haben.

4. Verwendung nach Anspruch 1 bis 3, zum Abdichten von Tunneln, Stollen, Schächten, Kanälen oder Kavernen.

## Claims

1. Use of polyamides based on reaction products of polymer fatty acids, optionally C₁₄₋₁₈ monocarboxylic acids, C₄₋₁₄ dicarboxylic acids and diamines, **characterized in that** the water-soluble or water-extractable constituents have a daphniae toxicity EC50 of > 300 g eluate/l or **in that**, where the test waters are diluted top 1:10, they have no toxic effects on daphniae according to DIN 38412, Part 11, for sealing cavities in the ground, in rock formations, building constructions and/or walls.

2. Use claimed in claim 1, **characterized in that**
• 20 to 99 mol-%, preferably 30 to 95 mol-% dimer or polymer fatty acid
• 0 to 50 mol-%, preferably 0 to 30 mol-% C₁₄₋₁₈ monocarboxylic acid
• 0 to 80 mol-%, preferably 5 to 70 mol-% C₄₋₁₂ dicarboxylic acids
• 20 to 85 mol-% aliphatic diamines
• 0 to 70 mol-% cycloaliphatic diamines
• 0 to 60 mol-% polyoxyalkylene diamines
• 0 to 50 mol-%, preferably 0 to 30 mol-% monofunctional amines
are used as synthesis components,

3. Use claimed in claims 1 and 2, **characterized in that** they have a melt viscosity at 190°C of 50 to 10,000 and preferably 100 to 4,000 mPa.s, as measured to ASTM D 3236.

4. Use claimed in claims 1 to 3 for sealing tunnels, galleries, shafts, passages or caverns.

## Revendications

1. Utilisation de polyamides à base de produits de réaction d'acides gras polymères, le cas échéant d'acides monocarboxyliques en C₁₄-C₁₈, d'acides dicarboxyliques en C₄-C₁₄ et de diamines, **caractérisée en ce que** les constituants solubles dans l'eau ou aptes à être extraits dans l'eau possèdent une toxicité pour les daphnies CE50 de > 300 g éluat/l ou bien, dans le cas d'une dilution des eaux échantillons jusqu'au 1 : 10, ces constituants n'ont pas d'effet toxique lorsqu'on se réfère à la norme DIN 38412 partie 11 sur les daphnies, pour l'étanchéisation d'espaces creux dans le sol, dans des formations en pierre, dans des constructions de bâtiments et/ou dans des murs.

2. Utilisation selon la revendication 1, **caractérisée en ce qu'**on utilise à titre de composants constitutifs :
- à concurrence de 20 à 99 mol %, de préférence de 30 à 95 mol %, des acides gras dimères, respectivement polymères ;
- à concurrence de 0 à 50 mol %, de préférence de 0 à 30 mol %, un acide monocarboxylique en C₁₄-C₁₈ ;
- à concurrence de 0 à 80 mol %, de préférence de 5 à 70 mol %, des acides dicarboxyliques en C₄-C₁₂ ;
- à concurrence de 20 à 85 mol %, des diamines aliphatiques ;
- à concurrence de 0 à 70 mol % des diamines cycloaliphatiques ;
- à concurrence de 0 à 60 mol % des polyoxyalkylènediamines ;
- à concurrence de 0 à 50 mol %, de préférence de 0 à 30 mol %, des amines monofonctionnelles.

3. Utilisation selon les revendications 1 et 2, **caractérisée en ce qu'**ils possèdent, à 190 °C, une viscosité en fusion de 50 à 10.000, de préférence de 100 à 4000 mPa.s, mesurée conformément à la norme ASTM D 3236.

4. Utilisation selon les revendications 1 à 3, pour l'étanchéisation de tunnels, de galeries, de puits, de canaux ou de cavernes.
